# EUROPEAN PATENT SPECIFICATION

(11) **EP 3 179 081 B1**
(45) Date of publication and mention of the grant of the patent: **01.04.2020**
(21) Application number: 15198359.0
(22) Date of filing: 08.12.2015
(51) Int. Cl.: F02D 41/00, F02B 39/10, F02D 41/28, F02D 41/30

(54) **FUEL-SAVING AND ENERGY-SAVING CAR CONTROLLER**
SPRITSPARENDE UND ENERGIESPARENDE AUTOSTEUERUNG
CONTRÔLEUR ÉCOÉNERGÉTIQUE ET D'ÉCONOMIE DE CARBURANT DE VOITURE

(43) Date of publication of application: 14.06.2017
(73) Proprietor: Wang Lai International Co., Ltd., Taipei 100, Taiwan (TW)
(72) Inventor: CHENG, Ming-Hung, Sioushuei Township (TW)
(74) Representative: Patentanwälte Hosenthien-Held und Dr. Held

(56) References cited:
- EP-A1- 0 969 193
- EP-A1- 2 781 717
- WO-A1-2015/129590
- WO-A2-2008/095129
- US-A1- 2006 122 762

## Description

The present invention relates to a car controller and, more particularly, to a car controller for increasing the air input of a car engine.

A conventional car engine supercharger is a mechanic supercharger which includes a belt and a belt wheel to connect an air inlet fan. When the car engine is operated, the car engine drives the belt and the belt wheel to operate the air inlet fan to increase the air flow from the air inlet pipe into the car engine so as to enhance the working efficiency of the car engine. However, the air flow cannot be controlled precisely by the car computer so that the air flow introduced into the car engine is often too large. Thus, when the car is driven at a high speed, the air flow is too large so that the fuel output is too large, and the fuel is not burned completely, thereby easily causing a carbon deposition and wasting the fuel. In addition, when the car engine is under an idling operation, the air inlet fan is operated successively so that the air inlet fan easily produces noise under the idling operation of the car engine, thereby causing an uncomfortable sensation to the driver.

Another conventional car engine supercharger is a turbocharger which includes a turbine and an air inlet pipe. When in use, the car engine produces wasted gas during operation. The wasted gas produced by the car engine drives the turbine which is rotated in the air inlet pipe to increase the air flow from the air inlet pipe into the car engine so as to enhance the working efficiency of the car engine. However, when the car engine is operated at a lower rotation speed, the flow rate of the wasted gas is reduced so that the wasted gas cannot drive the turbine efficiently, thereby decreasing the working efficiency of the car engine. In addition, the turbocharger is not connected with an air input detector so that the turbocharger cannot precisely control the fuel output according to the air input, and cannot achieve a fuel-saving effect.

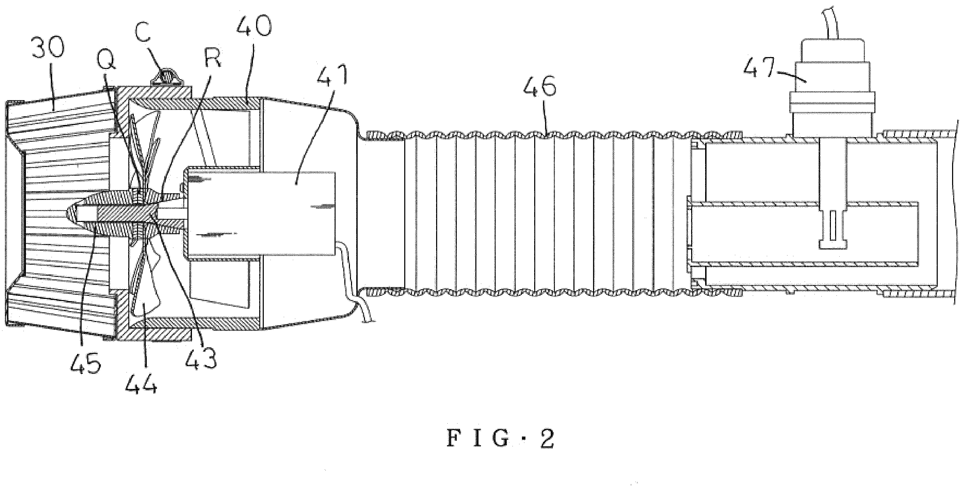

EP 0 969 193 A1 discloses a fuel supply system for automotive engines comprising an air filter 10, an air flow sensor 20, an engine 30, two air hoses 40, 41, an accelerator pedal 50, a throttle valve 60, a microcontroller 70, a microswitch 80, a motor control circuit 90, a turbocharger 100, an axial flow turbo fan 107, a drive motor 110, a flat casing 101, a cover body 102, and four fuel injection nozzles 31a, 31b, 31c, 31d. The accelerator pedal 50 opens or closes the throttle valve 60, and the microswitch 80 detects the angle of the throttle valve 60, to control the input flow amount of the air that flows into the engine 30, so as to regulate the injected fuel output of the fuel injection nozzles 31a, 31b, 31c, 31d according to the input flow amount of the engine 30, and to supply the air volume of the engine 30 according to the rotation speed of the engine 30. The turbocharger 100 is located in rear of the air flow sensor 20. In such a manner, when the turbocharger 100 is located in rear of the air flow sensor 20 as shown in FIG. 2, the air flow sensor 20 only detects the air input from the air filter 10 into the engine 30, and cannot detect the air input from the turbocharger 100 into the engine 30, such that the exact air input is greater than the detected air input. Thus, the microcontroller 70 cannot exactly control the injected fuel output of the fuel injection nozzles 31a, 31b, 31c, 31d, according to the rotation speed of the engine 30, such that the injected fuel output of the fuel injection nozzles 31a, 31b, 31c, 31d is larger than the required fuel output, thereby wasting the fuel, and thereby easily causing carbon deposition. In addition, the air output is not controlled precisely so that the air output is often too large. Thus, when the car is driven at a high speed, the air flow is too large so that the fuel output is too large, and the fuel is not burned completely, thereby easily causing a carbon deposition and wasting the fuel. Moreover, when the car engine 30 is under an idling operation, the axial flow turbo fan 107 is operated successively so that the turbocharger 100 keeps operating, and easily produces noise under the idling operation of the car engine 30, thereby causing an uncomfortable sensation to the driver.

US 2006/122762 A1 discloses a supercharge controller having an engine control unit, a display, a test switch. The control is modified if abnormalities are detected by other systems.

The primary objective of the present invention is to provide a fuel-saving and energy-saving car controller.

In accordance with the present invention, there is provided a fuel-saving and energy-saving car controller comprising a power supercharge control box electrically connected with a direct-current brushless motor of a power supercharger. The power supercharger has a first end connected with an engine. An air cleaner is mounted on a second end of the power supercharger. The direct-current brushless motor is mounted in the power supercharger and is provided with an air inlet fan. An air input detector is mounted on the power supercharger. An air throttle is mounted on the engine and is electrically connected with an accelerator pedal to control an air inlet flow into the engine. A fuel injection supply device is connected with the engine. The fuel injection supply device is electrically connected with the air input detector and the accelerator pedal. The air input detector detects the air inlet flow through the air cleaner and the power supercharger into the engine and transmits a signal to the fuel injection supply device so that the fuel injection supply device injects a determined amount of fuel. The accelerator pedal is driven by a driver's pedaling force to control an air input of the air throttle and to control a fuel output of the fuel injection supply device. The power supercharge control box is electrically connected with a car battery. The car battery supplies an electric power to the direct-current brushless motor. The power supercharge control box includes a single-chip control circuit. The fuel-saving and energy-saving car controller is characterized by the power supercharger is located in front of the air input detector. The power supercharge control box further includes a motor actuating circuit electrically connected between the direct-current brushless motor and the single-chip control circuit, a liquid crystal display module electrically connected with the single-chip control circuit, a push button actuation circuit electrically connected with the single-chip control circuit, and a communication module communicating between the single-chip control circuit and an on-board diagnostics. The on-board diagnostics communicates with a car computer by a network. The communication module of the power supercharge control box reads data in the on-board diagnostics or the car computer so as to detect a rotation speed of the engine. The direct-current brushless motor of the power supercharger is electrically connected with the single-chip control circuit by the motor actuating circuit. The communication module transmits a signal to the single-chip control circuit which drives the motor actuating circuit which controls the direct-current brushless motor which regulates a rotation speed of the air inlet fan according to the detected rotation speed of the engine. The air input detector detects the air inlet flow through the air cleaner and the power supercharger into the engine and transmits a signal to the fuel injection supply device so that the fuel injection supply device injects a determined amount of fuel. The fuel-saving and energy-saving car controller increases the air input of the engine, without increasing the rotation speed of the engine, and without increasing the fuel output of the fuel injection supply device, such that the fuel is burned completely, to prevent the engine from incurring a carbon deposition, and to enhance the working efficiency of the engine.

According to the primary advantage of the present invention, the communication module of the power supercharge control box reads the data in the on-board diagnostics and the car computer to detect the rotation speed of the engine, so that the fuel-saving and energy-saving car controller can properly increase the air input of the engine, without increasing the rotation speed of the engine, and without increasing the fuel output of the fuel injection supply device, such that the fuel is burned completely, thereby preventing the engine from incurring a carbon deposition, and thereby enhancing the working efficiency of the engine.

According to another advantage of the present invention, the car can travel a longer distance at the same amount of fuel, thereby saving the fuel and the energy.

Further benefits and advantages of the present invention will become apparent after a careful reading of the detailed description with appropriate reference to the accompanying drawings.

In the drawings:
FIG. 1 is a perspective view of a fuel-saving and energy-saving car controller mounted on a car engine in accordance with the preferred embodiment of the present invention.
FIG. 2 is a partially cross-sectional view of FIG. 1.
FIG. 3 is a schematic operational view of the fuel-saving and energy-saving car controller for the car in accordance with the preferred embodiment of the present invention.
FIG. 4 is a schematic operational block diagram of the present invention.
FIG. 5 is another schematic operational block diagram of FIG. 4.
FIG. 6 is an operational block diagram of the fuel-saving and energy-saving car controller of the present invention.
FIG. 7 is another schematic operational block diagram of FIG. 6.

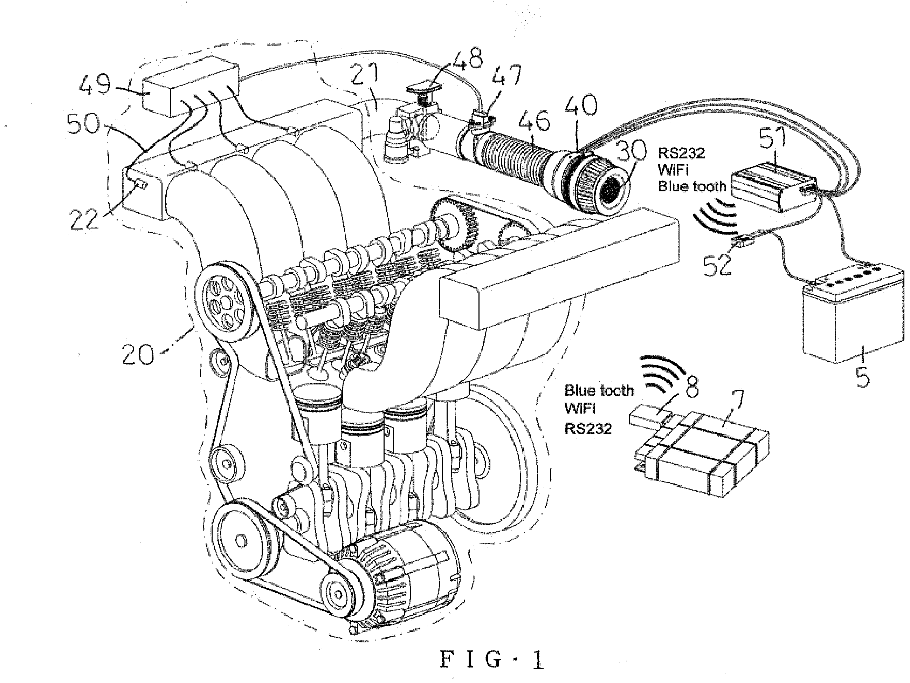

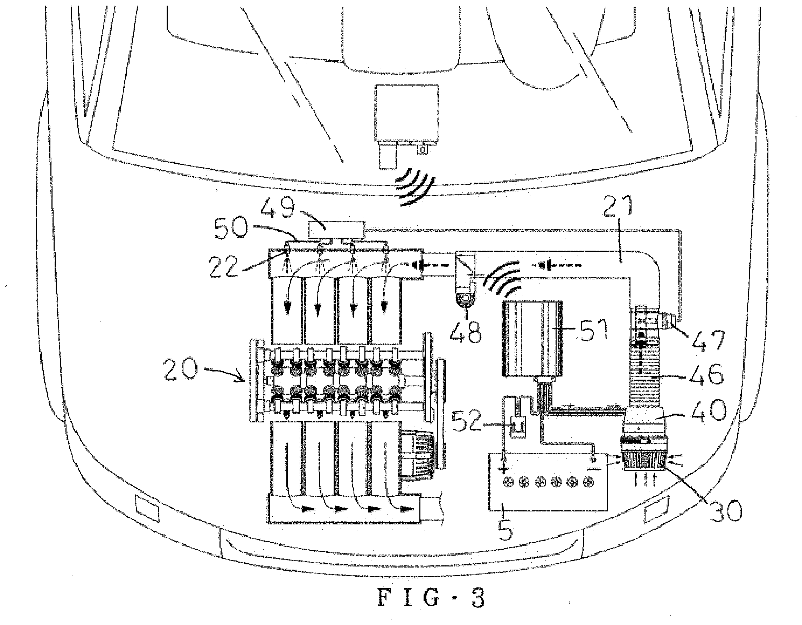

Referring to the drawings and initially to FIGS. 1-6, a fuel-saving and energy-saving car controller in accordance with the preferred embodiment of the present invention is connected with a power supercharger 40 and comprises a power supercharge control box 51 electrically connected with a direct-current brushless motor 41 of the power supercharger 40.

The power supercharger 40 has a first end provided with an air inlet pipe 46 connected with an air inlet 21 of an engine 20. An air cleaner 30 is mounted on a second end of the power supercharger 40 and locked by a retainer "C". The direct-current brushless motor 41 is mounted in the power supercharger 40. The direct-current brushless motor 41 of the power supercharger 40 has a rotor 43 provided with a bushing "R", an air inlet fan 44 and two washers "Q". A cone-shaped vortex generator 45 is locked onto a distal end of the rotor 43 to evenly distribute and diffuse the air flow in a vortex manner so that the air and the fuel are mixed completely to enhance the burning efficiency. In addition, the vortex generator 45 reduces the noise produced during rotation of the air inlet fan 44. An air input detector 47 is mounted on the air inlet pipe 46 of the power supercharger 40. An air throttle 48 is mounted on the air inlet 21 of the engine 20 and is electrically connected with an accelerator pedal (not shown) to control the air inlet flow into the engine 20. A fuel injection supply device 49 is mounted on the engine and has a plurality of fuel pipes 50 connected with fuel inlets 22 of the engine 20. The fuel injection supply device 49 is electrically connected with the air input detector 47 and the accelerator pedal. The air input detector 47 detects the air inlet flow through the air cleaner 30 and the power supercharger 40 into the engine 20 and transmits a signal to the fuel injection supply device 49 so that the fuel injection supply device 49 injects a determined amount of fuel. The accelerator pedal is driven by a driver's pedaling force to control the air input of the air throttle 48 and to control the fuel output of the fuel injection supply device 49.

The power supercharge control box 51 is electrically connected with a car battery 5. A fuse 52 is mounted between the power supercharge control box 51 and the car battery 5 to prevent the direct-current brushless motor 41 from being burned or worn out due to an overload.

The power supercharge control box 51 includes a single-chip control circuit 1, a motor actuating circuit 42 electrically connected between the direct-current brushless motor 41 and the single-chip control circuit 1, a liquid crystal display module 2 electrically connected with the single-chip control circuit 1 to provide a display function, a push button actuation circuit 3 electrically connected with the single-chip control circuit 1 to provide an operation function, a bleeder circuit 4 electrically connected between the single-chip control circuit 1 and the car battery 5, a buck circuit 6 electrically connected with the car battery 5, and a communication module communicating between the single-chip control circuit 1 and an on-board diagnostics (OBD) 8.

The car battery 5 supplies an electric power to the direct-current brushless motor 41. The liquid crystal display module 2 is preferably an organic light emitting diode (OLED). The on-board diagnostics 8 communicates with a car computer 7 by a network. The network is preferably a controller area network (CAN or CAN BUS) which is a communication protocol. The communication module includes a blue tooth communication module 9, a WiFi communication module 10 or an RS232 communication module 11. The RS232 is an interface standard of a serial information communication established by the American electronics industry association (EIA). The power supercharge control box 51 further includes a communication unit 12 communicating between the single-chip control circuit 1 and the car computer 7. The communication unit 12 is preferably a controller area network (CAN or CAN BUS). In practice, the communication unit 12 reads the data in the car computer 7 so as to detect the rotation speed of the engine 20. Then, the communication unit 12 transmits a signal to the single-chip control circuit 1 according to the detected rotation speed of the engine 20. Then, the single-chip control circuit 1 drives the motor actuating circuit 42 which controls the direct-current brushless motor 41 to regulate the rotation speed of the air inlet fan 44.

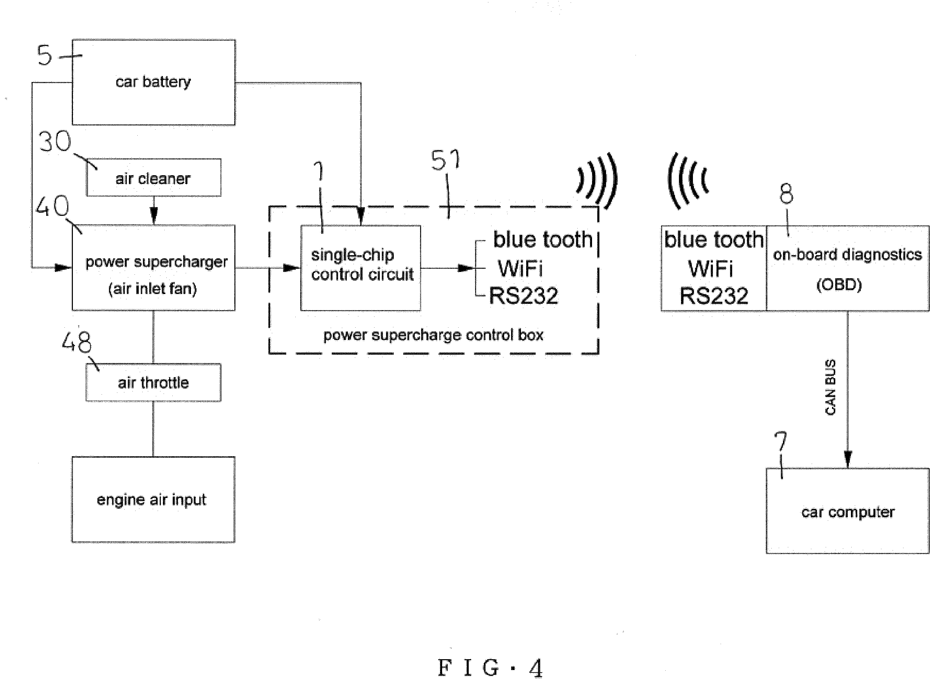

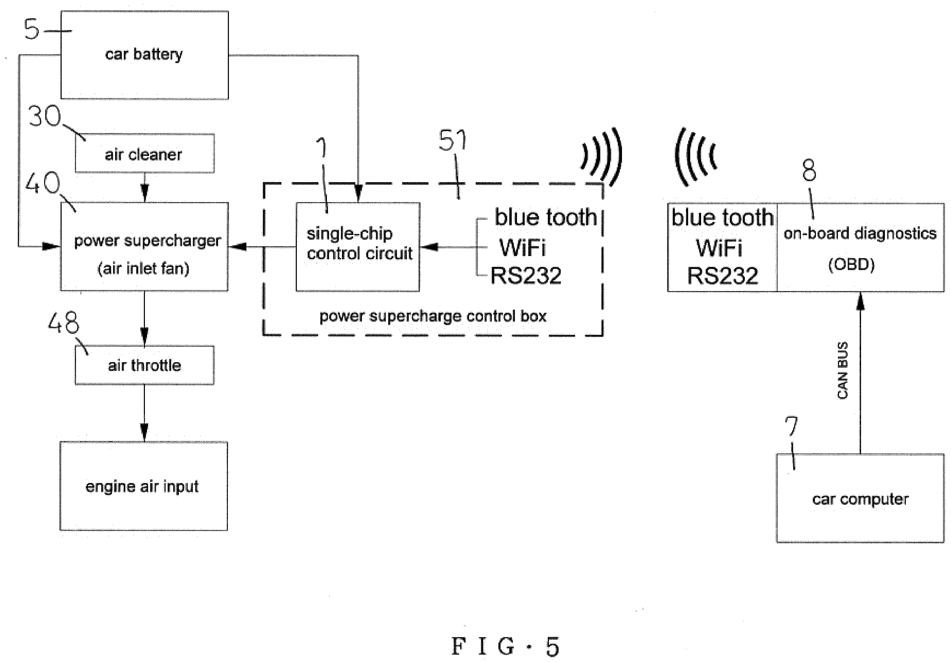

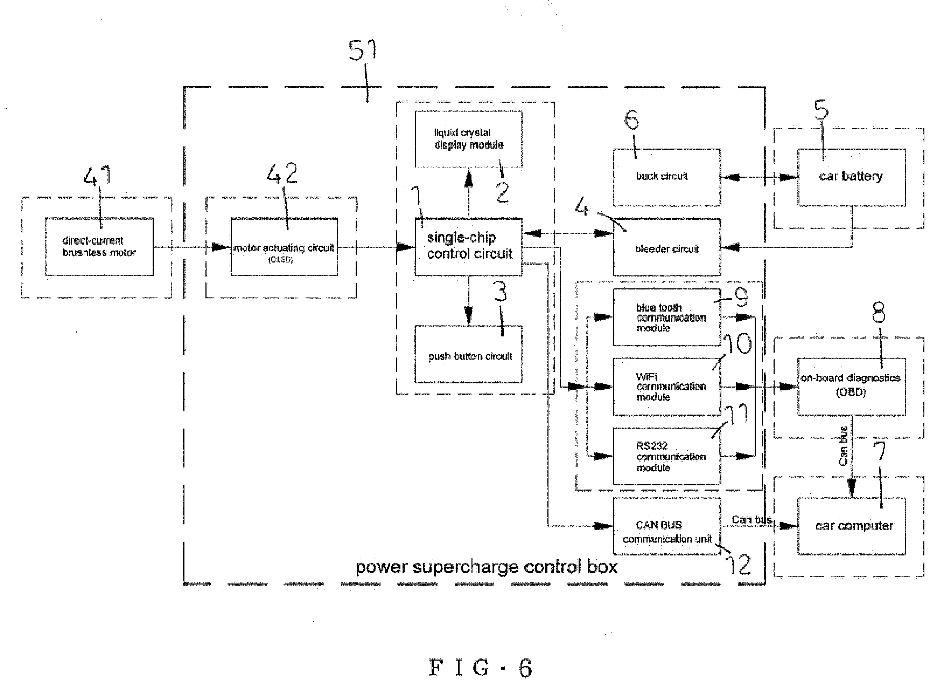

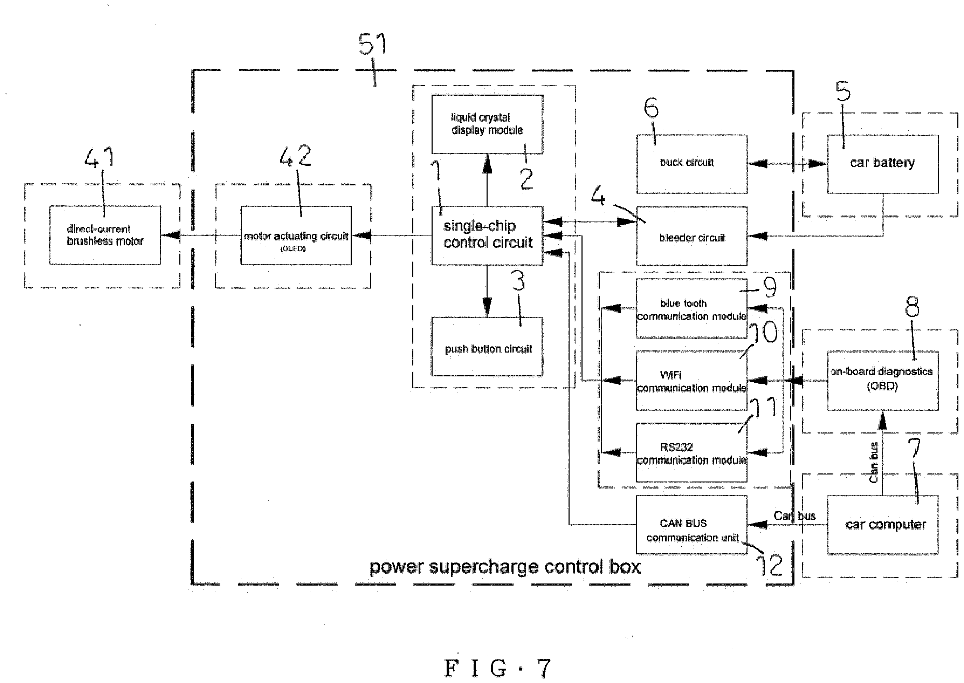

In operation, referring to FIGS. 4-7 with reference to FIGS. 1-3, when the engine 20 is started by the driver, the communication module (including the blue tooth communication module 9, the WiFi communication module 10 or the RS232 communication module 11) communicates with the on-board diagnostics 8 which communicates with the car computer 7 by the controller area network (CAN or CAN BUS), so that the communication module of the power supercharge control box 51 can read the data in the on-board diagnostics 8 and the car computer 7 as shown in FIGS. 4 and 6 so as to detect the rotation speed of the engine 20. Alternatively, the communication unit 12 can directly read the data in the car computer 7 so as to detect the rotation speed of the engine 20. Then, the communication module transmits a signal to the single-chip control circuit 1 as shown in FIGS. 5 and 7. Then, the single-chip control circuit 1 drives the motor actuating circuit 42 which controls the direct-current brushless motor 41 as shown in FIG. 7 to regulate the rotation speed of the air inlet fan 44. At the same time, the air input detector 47 detects the air inlet flow through the air cleaner 30 and the power supercharger 40 into the engine 20 and transmits a signal to the fuel injection supply device 49 so that the fuel injection supply device 49 injects a determined amount of fuel.

Accordingly, the communication module of the power supercharge control box 51 reads the data in the on-board diagnostics 8 and the car computer 7 to detect the rotation speed of the engine 20, so that the fuel-saving and energy-saving car controller of the present invention can properly increase the air input of the engine 20, without increasing the rotation speed of the engine 20, and without increasing the fuel output of the fuel injection supply device 49, such that the fuel is burned completely, thereby preventing the engine 20 from incurring a carbon deposition, and thereby enhancing the working efficiency of the engine 20. In addition, the car can travel a longer distance at the same amount of fuel, thereby saving the fuel and the energy.

## Claims

1. A fuel-saving and energy-saving car controller comprising:
a power supercharge control box (51) electrically connected with a direct-current brushless motor (41) of a power supercharger (40);
wherein:
the power supercharger has a first end connected with an engine (20);
an air cleaner (30) is mounted on a second end of the power supercharger;
the direct-current brushless motor is mounted in the power supercharger and is provided with an air inlet fan (44);
an air input detector (47) is mounted on the power supercharger;
an air throttle (48) is mounted on the engine and is electrically connected with an accelerator pedal to control an air inlet flow into the engine;
a fuel injection supply device (49) is connected with the engine;
the fuel injection supply device is electrically connected with the air input detector and the accelerator pedal;
the air input detector detects the air inlet flow through the air cleaner and the power supercharger into the engine and transmits a signal to the fuel injection supply device so that the fuel injection supply device injects a determined amount of fuel;
the accelerator pedal is driven by a driver's pedaling force to control an air input of the air throttle and to control a fuel output of the fuel injection supply device;
the power supercharge control box is electrically connected with a car battery (5);
the car battery supplies an electric power to the direct-current brushless motor;
the power supercharge control box includes a single-chip control circuit (1);
**characterized in that**:
the power supercharger (40) is located in front of the air input detector (47);
the power supercharge control box further includes:
a motor actuating circuit (42) electrically connected between the direct-current brushless motor and the single-chip control circuit;
a liquid crystal display module (2) electrically connected with the single-chip control circuit;
a push button actuation circuit (3) electrically connected with the single-chip control circuit; and
a communication module communicating between the single-chip control circuit and an on-board diagnostics (8);
the on-board diagnostics communicates with a car computer (7) by a network;
the communication module of the power supercharge control box reads data in the on-board diagnostics or the car computer so as to detect a rotation speed of the engine;
the direct-current brushless motor (41) of the power supercharger (40) is electrically connected with the single-chip control circuit (1) by the motor actuating circuit (42);
the communication module transmits a signal to the single-chip control circuit which drives the motor actuating circuit which controls the direct-current brushless motor which regulates a rotation speed of the air inlet fan according to the detected rotation speed of the engine (20);
the air input detector detects the air inlet flow through the air cleaner and the power supercharger into the engine and transmits a signal to the fuel injection supply device so that the fuel injection supply device injects a determined amount of fuel;
the fuel-saving and energy-saving car controller increases the air input of the engine (20), without increasing the rotation speed of the engine (20), and without increasing the fuel output of the fuel injection supply device (49), such that the fuel is burned completely, to prevent the engine (20) from incurring a carbon deposition, and to enhance the working efficiency of the engine (20).

2. The fuel-saving and energy-saving car controller of claim 1, wherein:
the network is a controller area network (CAN or CAN BUS);
the communication module includes a blue tooth communication module (9), a WiFi communication module (10) or an RS232 communication module (11);
the power supercharge control box further includes a communication unit (12) communicating between the single-chip control circuit and the car computer; and
the communication unit is a controller area network (CAN or CAN BUS).

## Patentansprüche

1. Kraftstoffsparende und energiesparende Fahrzeugsteuerung, aufweisend:
eine Leistungskompressor-Steuerbox (51), die elektrisch mit einem bürstenlosen Gleichstrommotor (41) eines Leistungskompressors (40) verbunden ist;
wobei:
der Leistungskompressor ein erstes Ende hat, das mit einem Motor (20) verbunden ist;
ein Luftfilter (30) an einem zweiten Ende des Leistungskompressors angebracht ist; der bürstenlose Gleichstrommotor im Leistungskompressor montiert ist und mit einem Lufteinlasslüfter (44) versehen ist;
ein Lufteinlassdetektor (47) an dem Leistungskompressor angebracht ist;
eine Luftdrossel (48) an dem Motor angebracht ist und elektrisch mit einem Gaspedal verbunden ist, um einen Lufteinlassstrom in den Motor zu steuern;
eine Kraftstoffeinspritzversorgungsvorrichtung (49) mit dem Motor verbunden ist;
die Kraftstoffeinspritzversorgungsvorrichtung elektrisch mit dem Lufteinlassdetektor und dem Gaspedal verbunden ist;
der Lufteinlassdetektor den Lufteinlassstrom durch den Luftfilter und den Leistungskompressor in den Motor erfasst und ein Signal an die Kraftstoffeinspritzversorgungsvorrichtung überträgt, so dass die Kraftstoffeinspritzversorgungsvorrichtung eine bestimmte Kraftstoffmenge einspritzt;
das Gaspedal durch eine Tretkraft eines Fahrers angetrieben wird, um einen Lufteinlass der Luftdrossel zu steuern und einen Kraftstoffausgang der Kraftstoffeinspritzversorgungsvorrichtung zu steuern;
die Leistungskompressor-Steuerbox elektrisch mit einer Autobatterie (5) verbunden ist;
die Autobatterie den bürstenlosen Gleichstrommotor mit elektrischer Energie versorgt;
die Leistungskompressor-Steuerbox eine Ein-Chip-Steuerschaltung (1) aufweist;
**dadurch gekennzeichnet, dass**:
der Leistungskompressor (40) vor dem Lufteinlassdetektor (47) angeordnet ist;
die Leistungskompressor-Steuerbox ferner aufweist:
eine Motorbetätigungsschaltung (42), die elektrisch zwischen den bürstenlosen Gleichstrommotor und der Ein-Chip-Steuerschaltung geschaltet ist;
ein Flüssigkristallanzeigemodul (2), das elektrisch mit der Ein-Chip-Steuerschaltung verbunden ist;
eine Druckknopfschaltung (3), die elektrisch mit der Ein-Chip-Steuerschaltung verbunden ist; und
ein Kommunikationsmodul, das zwischen der Ein-Chip-Steuerschaltung und einer On-Board-Diagnose (8) kommuniziert;
die On-Board-Diagnose mit einem Autocomputer (7) über ein Netzwerk kommuniziert,
das Kommunikationsmodul der Leistungskompressor-Steuerbox Daten aus der Borddiagnose oder dem Autocomputer liest, um eine Drehzahl des Motors zu erfassen;
der bürstenlose Gleichstrommotor (41) des Leistungskompressors (40) elektrisch mit der Ein-Chip-Steuerschaltung (1) über die Motorbetätigungsschaltung (42) verbunden ist;
das Kommunikationsmodul ein Signal an die Ein-Chip-Steuerschaltung sendet, welche die Motoransteuerschaltung ansteuert, die den bürstenlosen Gleichstrommotor steuert, der die Drehzahl des Lufteinlasslüfters gemäß der Drehzahl des Motors (20) regelt;
der Lufteinlassdetektor den Lufteinlassstrom durch den Luftfilter und den Leistungskompressor in den Motor ermittelt und ein Signal an die Kraftstoffeinspritzversorgungsvorrichtung überträgt, so dass die Kraftstoffeinspritzversorgungsvorrichtung eine bestimmte Kraftstoffmenge einspritzt; die kraftstoffsparende und energiesparende Fahrzeugsteuerung den Lufteinlass des Motors (20) erhöht, ohne die Drehzahl des Motors (20) zu erhöhen, und ohne den Kraftstoffausgang der Kraftstoffeinspritzversorgungsvorrichtung (49) zu erhöhen, so dass der Kraftstoff vollständig verbrannt wird, um zu verhindern, dass beim Motor (20) eine Kohlenstoffablagerung auftritt, und um den Wirkungsgrad des Motors (20) zu verbessern.

2. Kraftstoffsparende und energiesparende Fahrzeugsteuerung nach Anspruch 1, wobei:
das Netzwerk ein Controller Area Network (CAN oder CAN BUS) ist;
das Kommunikationsmodul ein Bluetooth-Kommunikationsmodul (9), ein WiFi-Kommunikationsmodul (10) oder ein RS232-Kommunikationsmodul (11) aufweist;
die Leistungskompressor-Steuerbox ferner eine Kommunikationseinheit (12) enthält,
die zwischen der Ein-Chip-Steuerschaltung und dem Autocomputer kommuniziert;
und die Kommunikationseinheit ein Controller Area Network (CAN oder CAN BUS) ist.

## Revendications

1. Contrôleur de voiture économiseur de carburant et économiseur d'énergie comprenant :
une boîte de commande de suralimentation de puissance (51) connectée électriquement à un moteur sans balais à courant continu (41) d'un compresseur à suralimentation de puissance (40) ;
où :
le compresseur à suralimentation de puissance a une première extrémité connectée à un moteur (20) ;
un nettoyeur d'air (30) est monté sur une deuxième extrémité du compresseur à suralimentation de puissance ;
le moteur sans balais à courant continu est monté dans le compresseur à puissance et est pourvu d'un ventilateur d'entrée d'air (44) ;
un détecteur d'entrée d'air (47) est monté sur le compresseur à suralimentation de puissance ;
un régulateur d'air (48) est monté sur le moteur et est connecté électriquement à une pédale d'accélérateur pour contrôler un flux d'entrée d'air dans le moteur ;
un dispositif d'alimentation par injection de carburant (49) est connecté au moteur ;
le dispositif d'alimentation par injection de carburant est connecté électriquement au détecteur d'entrée d'air et à la pédale d'accélérateur ;
le détecteur d'entrée d'air détecte le flux d'entrée d'air à travers le nettoyeur d'air et le compresseur à suralimentation de puissance dans le moteur et transmet un signal au dispositif d'alimentation par injection de carburant de sorte que le dispositif d'alimentation par injection de carburant injecte une quantité déterminée de carburant ;
la pédale d'accélérateur est actionnée par une force du conducteur exercée sur la pédale pour contrôler une entrée d'air du régulateur d'air et pour contrôler une sortie de carburant du dispositif d'alimentation par injection de carburant ;
la boîte de commande de suralimentation de puissance est connectée électriquement à une batterie de voiture (5) ;
la batterie de voiture fournit une énergie électrique au moteur sans balais à courant continu ;
la boîte de commande de suralimentation de puissance comprend un circuit de commande monopuce (1) ;
**caractérisé en ce que** :
le compresseur à suralimentation de puissance (40) est situé devant le détecteur d'entrée d'air (47) ;
la boîte de commande de suralimentation de puissance comprend en outre :
un circuit actionneur de moteur (42) électriquement connecté entre le moteur sans balais à courant continu et le circuit de commande monopuce ;
un module d'affichage à cristaux liquides (2) connecté électriquement au circuit de commande monopuce ;
un circuit d'actionnement à bouton-poussoir (3) connecté électriquement au circuit de commande monopuce ; et
un module de communication communiquant entre le circuit de commande monopuce et un diagnostic embarqué (8) ;
le diagnostic embarqué communique avec un ordinateur de voiture (7) par un réseau ;
le module de communication de la boîte de commande de suralimentation de puissance lit les données dans le diagnostic embarqué ou l'ordinateur de voiture afin de détecter une vitesse de rotation du moteur ;
le moteur sans balais à courant continu (41) du compresseur à suralimentation de puissance (40) est connecté électriquement au circuit de commande monopuce (1) par le circuit actionneur du moteur (42) ;
le module de communication transmet un signal au circuit de commande monopuce qui actionne le circuit actionneur du moteur qui contrôle le moteur sans balais à courant continu qui règle une vitesse de rotation du ventilateur d'entrée d'air selon la vitesse de rotation détectée du moteur (20) ;
le détecteur d'entrée d'air détecte le flux d'entrée d'air à travers le nettoyeur d'air et le compresseur à suralimentation de puissance dans le moteur et transmet un signal au dispositif d'alimentation par injection de carburant de sorte que le dispositif d'alimentation par injection de carburant injecte une quantité déterminée de carburant ;
le contrôleur de voiture économiseur de carburant et économiseur d'énergie augmente l'entrée d'air du moteur (20), sans augmenter la vitesse de rotation du moteur (20), et sans augmenter la sortie de carburant du dispositif d'alimentation par injection de carburant (49), de sorte que le carburant est brûlé complètement, pour empêcher que le moteur (20) encoure un dépôt charbonneux, et pour améliorer le rendement de fonctionnement du moteur (20).

2. Contrôleur de voiture économiseur de carburant et économiseur d'énergie de la revendication 1, où :
le réseau est un réseau CAN (CAN ou bus CAN) ;
le module de communication comprend un module de communication bluetooth (9), un module de communication WiFi (10) ou un module de communication RS232 (11) ;
la boîte de commande de suralimentation de puissance comprend en outre une unité de communication (12) communiquant entre le circuit de commande monopuce et l'ordinateur de voiture ; et
l'unité de communication est un réseau CAN (CAN ou bus CAN).
